Europäisches Patentamt

European Patent Office

Office européen des brevets

(19)

(11) Publication number: **0 038 693**
**B1**

## (12) EUROPEAN PATENT SPECIFICATION

(45) Date of publication of patent specification: **29.02.84**

(51) Int. Cl.³: **G 02 B 5/17**

(21) Application number: **81301705.0**

(22) Date of filing: **16.04.81**

(54) Optical imaging system.

(30) Priority: **16.06.80 US 159993**
**23.04.80 US 142921**
**25.06.80 US 162986**

(43) Date of publication of application:
**28.10.81 Bulletin 81/43**

(45) Publication of the grant of the patent:
**29.02.84 Bulletin 84/9**

(84) Designated Contracting States:
**DE GB SE**

(56) References cited:
**GB - A - 1 270 343**
**GB - A - 1 489 420**
**GB - A - 2 023 302**

**Patents Abstracts of Japan Vol. 3, No. 25, 28
February 1979, page 161E94
APPLIED OPTICS, Vol. 19, No. 7, 1 April 1980
New York M. KAWAZU et al. "Application of
gradient-index fiber arrays to copying machines"
pages 1105 to 1112**

(73) Proprietor: **XEROX CORPORATION**
**Xerox Square - 020**
**Rochester New York 14644 (US)**

(72) Inventor: **Lama, William L.**
**73 Blue Creek Drive**
**Webster New York 14580 (US)**
Inventor: **Rees, James D.**
**5880 Palmyra Road**
**Pittsford New York 14534 (US)**
Inventor: **Appel, James J.**
**6061 Slocum Road**
**Ontario New York 14519 (US)**

(74) Representative: **Weatherald, Keith Baynes et al,
European Patent Attorney Rank Xerox Limited
Patent Department 338 Euston Road
London NW1 3BH (GB)**

Courier Press, Leamington Spa, England.

Optical imaging system

The present invention relates to an optical imaging system utilizing gradient index optical fibers and more particularly, to an array of fibers forming an imaging lens array which transmits an image at an object plane to an image plane. The fiber and array parameters are optimized so that the same or better radiometric efficiency and uniformity are obtained while using fewer fibers than required in the prior art, thereby permitting construction of a lens array comprising a single row of gradient index fibers.

GB—A—1 489 420 describes an optical imaging system wherein a plurality of gradient index fibers are arranged in a lens array which comprises a single row of fibres, each fibre having a diameter of only 10 microns to several millimetres.

Image transmitters comprising bundled gradient index optical fibers are known in the art. U.S. Patent 3,658,407 describes a light conducting fiber made of glass or synthetic resin which has a refractive index distribution in a cross section thereof that varies consecutively and parabolically outward from a center portion thereof. Each fiber acts as a focusing lens to transmit part of an image of an object placed, at, or near, one end. An assembly of fibers, in a staggered two-row array transmits and focuses a more complete image of the object. The fiber lenses are produced under the trade name "SELFOC"; the mark is registered in Japan and owned by Nippon Sheet Glass Co., Ltd.

These gradient index lens arrays have found use in a number of technologies; e.g. in construction of printed type optical circuits as disclosed in U.S. Patent 3;922,062 and as a replacement for conventional optical systems in copiers as disclosed in U.S. Patents 3,947,106 and 3,977,777.

Because of the apparent optical characteristics of the gradient index fibers, it has heretofore been accepted that, to transmit images with acceptable image quality, a two-row staggered array of fibers was required. The problems encountered with a one-row configuration, were twofold: firstly, maintaining the two-row radiometric efficiency so that the particular image is transmitted at the required level of illumination and secondly, reducing the spatial modulation of the illumination to acceptable levels.

According to this invention there is provided an optical imaging system which is as claimed in the appended claims.

The present invention will now be described, by way of example, with reference to the accompanying drawings, in which:—

Figure 1 is a schematic end view of a prior art gradient index lens array in an imaging system.

Figure 2 is a schematic top view (enlarged) of a portion of the lens array of Figure 1, also showing exposure conditions at the imaging plane.

Figure 3 is a graph plotting exposure modulation at the image plane against values of overlap parameter (*a*).

Figure 4 is a graph plotting exposure modulation at the image plane against values of spacing factor *b*.

Figure 5 is a graph plotting values of exposure modulation versus fiber radius.

Figure 6 is a schematic end view of a single row gradient index lens array imaging system of the present invention.

Figure 6A is a schematic top end view (enlarged) of the lens array of Fig. 6 showing increased inter-fiber spacing.

Figure 7 shows spacing parameters for a single row lens array.

Figure 8 is a graph plotting irradience modulation at the image plane against values of spacing factor *b*.

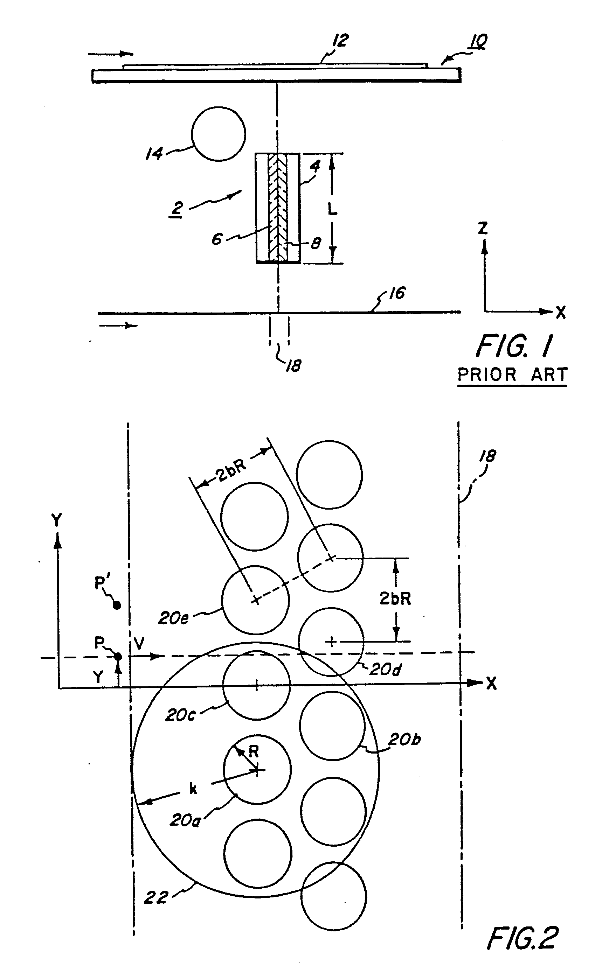

Referring now to Figure 1, there is shown, in schematic side view, a prior art optical imaging system 2 which includes a gradient index lens array 4 comprising two staggered rows 6, 8 of gradient index fibers arranged in a bundle configuration as is known in the prior art. Transparent object plane 10 is adapted for movement past lens 4 in the indicated direction. Plane 10 has an object 12, which may be a document, supported thereon. Lamp 14 provides a band of illumination across the width of the object plane 10.

In operation, plane 10 is moved across the illuminated area at a speed synchronous with that of a photosensitive imaging plane 16. A strip of light is reflected from object 12 and focussed by lens 4 onto exposure strip 18 of plane 16. Figure 2 is a top view, (enlarged), of a portion of lens 4 looking downward through the lens and viewing the corresponding portion of strip 18, in the image plane 16. Each fiber 20 produces an irradiance (optical power per unit area, H) distribution 22 in the image plane which is derived according to the principles disclosed in an article by James D. Rees and William L. Lama, entitled "Some Radiometric Properties of Gradient-Index Fiber Lenses", published in the 1 April 1980 issue of Applied Optics, Vol. 19, No. 2, pp. 1065—1069. A point P, specified by coordinates (X, Y), on image plane 16 moves at a speed *v* through exposure zone 18. The total exposure (E) of point P is defined as the integrated light energy per unit area (integral of H) that point P receives as it pases through zone 18. This total exposure is a summation of the exposure values of each contributing fiber.

The total exposure received by point P is derived by using the summing equations disclosed in the Rees-Lama reference. Of importance for the purposes herein is that the total exposure received by any point on the imaging plane passing through zone 18 is a function of its Y position on the plane. For example, point P′ adjacent point P will receive a different level of exposure because of the different overlapping orientation of the irradiance profiles of the contributing fibers. The exposure modulation, which is generally undesirable is defined as $[(E_{max}-E_{min}) / (E_{max}+E_{min})] \times 100\%$, where $E_{max}$ and $E_{min}$ are, respectively, the maximum and minimum values of exposure as a function of Y position. The particular values of fiber parameters that minimize the exposure modulation are described below.

A useful equation derived by Rees-Lama in the referenced article to describe circular irradiance profile 22 is as follows:

$$k = a\mathrm{R} = -\mathrm{R}\ \sec\ (\sqrt{A}\ L/2) \qquad (1)$$

where $k$ is the radius of the irradiance profile, $a$ is an "overlap parameter", R is th radius of the fiber, A is a gradient index constant and L is the fiber legth (in the Z direction). Equation (1) can be rewritten as an equation for the overlap parameter $a$:

$$a = -\sec\ (\sqrt{A}\ L/2) \qquad (2)$$

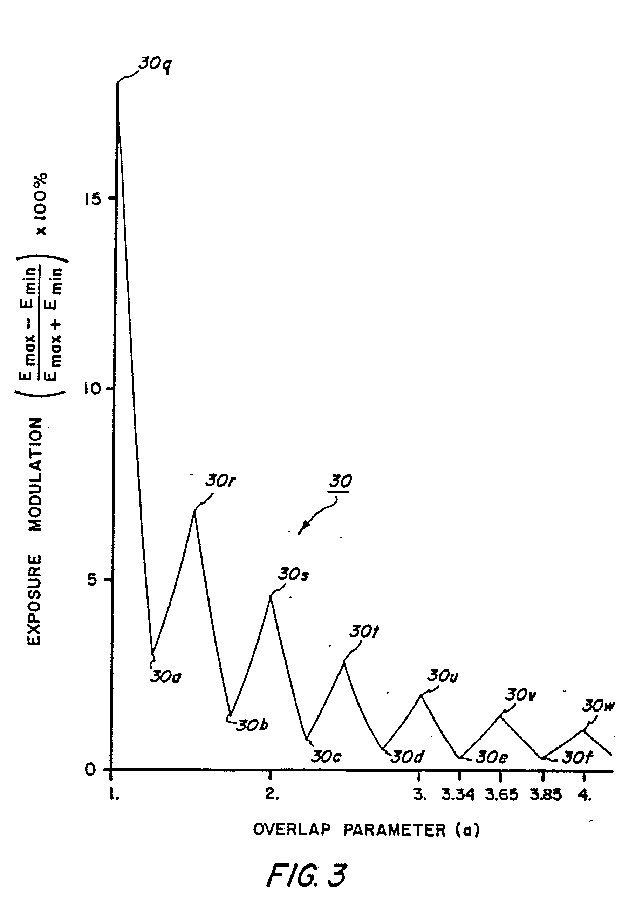

If $a$ is made to change by substituting appropriate values of A and L, values of exposure modulation against $a$ yield plot 30 shown in Figure 3 for $b = 1.0$. As is evident, the exposure modulation is not a monotonic decreasing function of $a$ but, rather, has various maximum (30q—30w) and minimum (30a—30f) values. Thus, the modulation can be minimized by selecting values of $a$ at one of points 30a—30f. which may be achieved by selecting particular values of the fiber parameters A, L.

As shown in the Rees-Lama article, the optimum values for $a$ are also given by the equation

$$a = \frac{b}{2}\sqrt{S(S+1)} \qquad (3)$$

where $b$ is a spacing factor equal to the separation between fiber centers divided by the fiber diameter 2R, and $S = 2, 3, 4, \ldots$

Note that Equation (3) may be rewritten as an equation for the spacing parameter

$$b = \frac{2a}{\sqrt{S(S+1)}} \qquad (4)$$

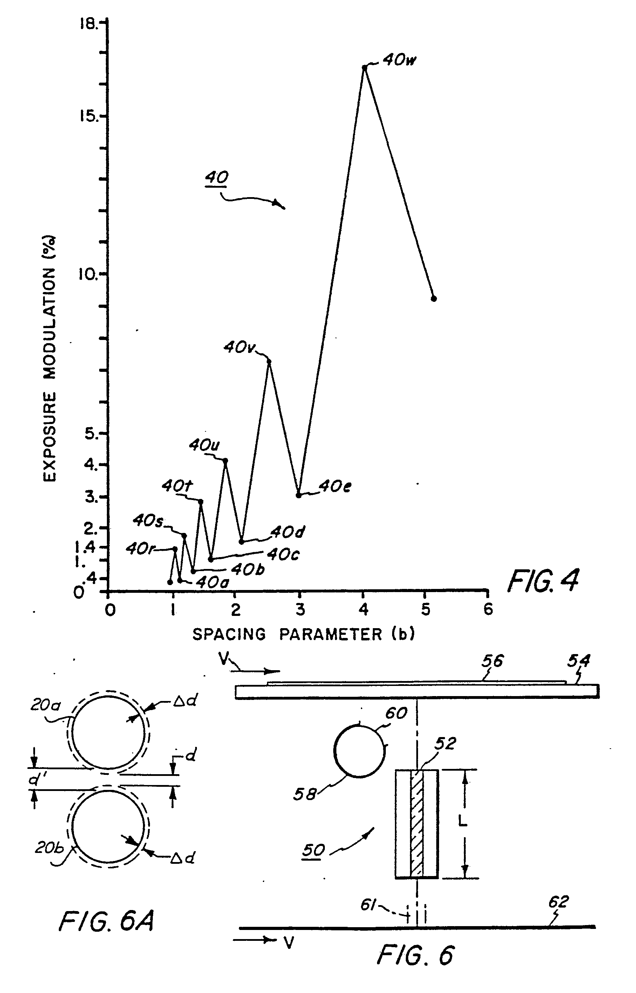

This equation would appear to be simply a restatement of Equation (3) without practical implication since it would seem logical to assume that modulation should just increase as $b$ is increased, i.e. as the fibers in the array are moved further and further apart. According to one aspect of the invention, however, Equation (4) yields optimum values of the spacing parameter $(b)$ for which the exposure modulation is minimized. Applicant tested this assumption by selecting a prior art fiber array having the parameters $\sqrt{A} = .1275$ mm$^{-1}$, and $L = 28.99$ mm. From equation (2) a value of $a$ of 3.635 is derived. Fiber spacing parameters $b$ for prior art arrays are typically around 1.03, and this value was selected for comparison. Values of exposure modulation were then calculated for a range of values of fiber spacing parameter $b$ from 1.0 to 5.0 yielding plot 40 as shown in Figure 4 for $a = 3.635$. As the plot clearly demonstrates, instead of the intuitively expected monotonic increase in modulation with increasing distance between fibers (higher values of $b$), the exposure modulation has a number of maxima (40r—40w) and of minima (40a—40l) corresponding to particular values of $b$ given by Equation (4). With this fresh insight, it was observed that the modulation could be minimized by selecting a value of $b$ corresponding to one of the minimum points. Thus, if the fiber spacing for the example given were increased from the standard value of 1.03 to 1.12, modulation would be decreased from 1.49% to 0.4%.

The above principles are also relevant for selecting an optimum separation parameter $b$ for minimum modulation in a single-row array. For a single-row array, the exposure modulation is increased relative to the two-row array, because of the elimination of the overlapping irradiance profiles from the second row. For the purpose of calculating exposure modulation, it may be seen with reference to Figure 2 that a double-row array with separation parameter $b$ equal to 2 is equivalent to a single-row array with a value of $b$ equal to 1, which is minimum value for an aligned single-row array. Using the graph of Figure 4, for the same fiber parameters, the optimum value of $b$ (greater than 2) would be 2.10. This corresponds to a single-row array with $b$ equal to 1.05, and this value yields less exposure modulation than the close -packed single-row array with $b$ equal to 1.0. For other values of $a$, i.e. other fiber parameters, the values of $b$ yielding modulation minima are given, for a single-row array, by Equation (4) divided by 2 or

$$b = \frac{a}{\sqrt{S(S+1)}}, \quad S = 1, 2, \ldots \qquad (5)$$

For example, if $a = 5.0$, the optimum value of $b$ given by Equation (5) for the single row array is 1.12, obtained when $S = 4$.

The second problem to be addressed in constructing a practical single row array, as described above, is compensating for the reduction in average exposure. The average exposure $\langle E \rangle$ on an image plane is given by the expression

$$\langle E \rangle = \frac{M\Pi^2\ NTn_0^2\ AR^3}{3vb}$$

where M is the number of rows of fibers, T is fiber transmission, N is lambertian radiance of the object, $n_0$ is the refractive index on the fiber axis and $v$ is the velocity of the image point moving through an exposure zone.

For an imaging lens array with given fiber parameters and a specified illumination source, the average exposure for a one-row array, is reduced by a factor of 2 compared to the two-row array. From equation (6), the average exposure of a single row array may be increased by the loss factor of 2 or more by increasing A, R, or both. Since exposure depends on the cube of the fiber radius R, while the distance between object and image planes is independant of radius (but dependent on A), a preferred solution would be to keep A fixed and increase R (an increase of R by 26% increases exposure by 100%). By increasing the radius however, it may be expected that the exposure modulation would worsen, since the fiber centers are moved further apart, and that the optimum single row separation parameter $b$ of 1.05 as arrived at above for $a = 3.635$ would no longer be valid. When this thesis was actually tested, however, it was determined that exposure modulation is *independent* of fiber radius as shown by Figure 5.

The description thus fare can be summarized as follows: For given gradient index fiber parameters $(n_0, \sqrt{A}, L, R)$, the exposure modulation can be minimized for a unique, but not obvious, value of the fiber spacing parameter $b$. Furthermore, the exposure modulation is not dependent on the fiber radius R. The first observation provides the means of reducing exposure modulation in the known two-row prior part devices. But more importantly, the implications of both discoveries are utilized to assemble a single-row array which is made as efficient as the two-row array but with minimum exposure modulation by increasing fiber radius R and by proper choice of the $b$ parameter.

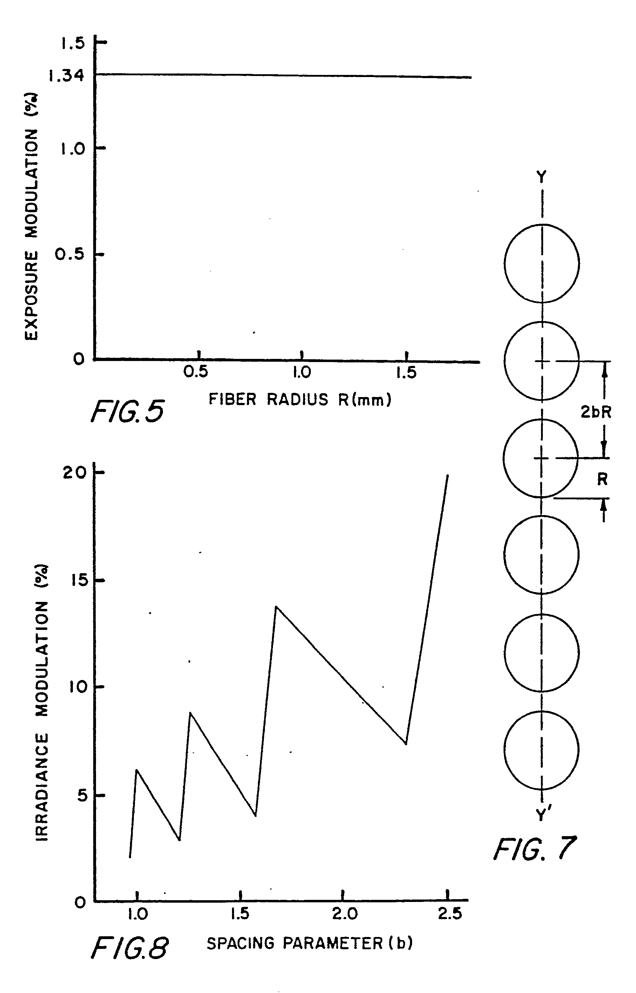

An exemplary single-row gradient index lens array is shown in end view in Figure 6 and in top view in Figure 7. In Figure 6, gradient index lens array 50 comprises a single 220 mm long row 52 of 150 gradient index fibers. Transparent object plane 54 is adapted for movement past lens 50 in the indication direction at a velocity $v$. Plane 54 has an object 56 which may be a document supported thereon. Fluoroescent lamp 58 provides an intense narrow band of illumination through aperture 60 across the width of object plane 54. The exposure strip 61 on photosensitive plane 62 moves in the indicated direction at the same velocity $v$ as the object plane. The object-to-lens distance is 32.3 mm; image-to-lens distance is 32.3 mm and length L of lens 50 is 35.4 mm for a total object-to-image distance of 100 mm. Fiber parameters were selected as follows:

$$n_0 = 1.53$$

$$\sqrt{A} = .100 \text{ mm}^{-1} \qquad (6)$$

$$R = .65 \text{ mm}$$

For these values, the overlap parameter $a$ has the value of 5.05 and, from Equation (5), the desired value of $b$ for minimum modulation was determined to be 1.13. The lens configuration described above provided the desired exposure level with 0.8% modulation.

The increase in fiber spacing parameter $b$ from 1.03 to 1.12 results in a new inter-fiber spacing value $d$ of .1278 mm or an increase of .09585 mm. A preferred method for forming a lens array with the required layer inter-fiber spacing is as follows. With reference to Figure 6A, before assembly, each fiber is dipped into the inter-fiber spacing material, which may be a light-absorbing black silicon resin, until a uniform coating $\Delta d$ of .0479 mm (.09585 mm/2) is obtained. This coating is allowed to cure to full hardness. The fibers are then pressed together in a resin mold in the conventional manner. It is thus evident that the thickness $\Delta d$ of the coating applied to each fiber (.0479 mm × 2) plus the original thickness $d$(.03195 mm) produces the final desired thickness $d$ of .1278 mm.

While this assembly method has been given for a specific example, it is obvious that other parameters and other coatings may be used.

In some applications (e.g. facsimile) the distribution of irradiance H in the image plane is of interest, rather than the distribution of exposure, E. In particular, the image plane irradiance along a line Y—Y' in Figure 7 is desired to be uniform. The same principles applied above to the exposure distribution show that the irradiance modulation along the line Y—Y' is also minimized at certain preferred values of the spacing parameter $b$ given for a single row array by the equation

$$b = \frac{a}{S + .175} \qquad (7)$$

where $b \geqslant 1$ and $S = 1, 2, 3 \ldots$ Figure 8 is a plot of irradiance modulation, $(H_{max} - H_{min} / H_{max} + H_{min}) \times 100\%$, as a function of spacing parameter $b$, for the case of overlap parameter $a$ equal to 5.0. In this case, the optimum value of $b$ is 1.20, which yields an irradiance modulation of 2.8%. Note that this value of $b$ differs from the value $b = 1.12$ that minimized the exposure modulation for $a = 5$. Thus, in applications where the irradiance must be uniform, Equation (7) may be used to design a lens array with a preferred value of spacing parameter $b$ to yield minimum irradiance modulation. Also, the fiber radii may be increased to obtain higher irradiance values without reducing the irradiance uniformity, similar to the previously-described class of arrays designed for exposure application.

**Claims**

1. An optical imaging system including at least one row of parallel gradient index optical fibres (52) positioned between, and extending perpendicular to, an object plane (54) and an image plane (62) so as to transmit light emanating from an object in the object plane onto the image plane, in which the fiber axes are spaced from the axes of adjacent fibers in the same row and any adjacent row by a distance 2R$b$, wherein R is the fiber radius (in mm), characterised in that $b$ is $a$ spacing factor satisfying the equation.

$$b = \frac{-\sec (\sqrt{A} \ L/2).M}{\sqrt{S (S + 1)}}$$

wherein,
A = gradient index constant of the fibers: ;
L = fiber length (in mm):
M = number of rows of fibers, and
S = 1, 2, 3 . . . .

2. A system as claimed in claim 1, characterised in that the equation is modified to be as follows when there is only one row of fibers:

$$b = \frac{-\sec (\sqrt{A} \ L/2}{S + .175}$$

wherein,
A = gradient index constant of the fibers:
L = fiber length (in mm),
S = 1, 2, 3 . . . .

3. A method of forming a plurality of parallel gradient index optical fibers (20) into an array as claimed in claim 1 or 2, characterised in that it includes the steps of:
determining an inter-fiber spacing distance $d' = 2R(b-1)$ satisfying the respective spacing factor according to the number of rows of fibers; coating each of the fibers with light-absorbent material to a known radial thickness $\Delta d$, and
pressing the coated fibers in a mold of light-absorbent material until the fibers are spaced from the or each adjacent fiber by the above determined distance.

**Revendications**

1. Système optique de formation d'image comprenant au moins une rangée de fibres optiques parallèles présentant un gradient d'indices de réfraction (52) placée entre un plan-objet (54) et un plan-image (62) et s'étendant perpendicullairement à ces deux plans, de manière à transmettre la lumière provenant d'un objet situé dans le plan-objet au plan-image, dans lequel les axes des fibres sont espacés des axes des fibres contiguës de la même rangée et de toute rangée contiguë suivant une distance 2R$b$, où R est le rayon (en mm) des fibres, caractérisé en ce que $b$ est un facteur d'espacement satisfaisant l'équation:

$$b = \frac{-\sec (\sqrt{A} \ L/2).M}{\cdot \sqrt{S (S + 1)}}$$

où
A = gradient d'indices constant des fibres;
L = longueur des fibres (en mm);
M = nombre de rangées de fibres; et
S = 1, 2, 3 . . .

2. Système selon la revendication 1, caractérisé en ce que l'équation est modifiée pour prendre la forme suivant lorsqu'il n'y a qu'une rangée de fibres:

$$b = \frac{-\sec (\sqrt{A} L/2}{S + .175}$$

où,
A = gradient d'indices constant des fibres;
L = longueur des fibres (en mm);
S = 1, 2, 3 . . .

3. Procédé de formation d'une pluralité de fibres optiques parallèles (20) présentant un gradient d'indices pour former un réseau selon les revendications 1 ou 2, caractérisé en ce qu'il comprend les étapes suivantes:
—la détermination d'une distance d'espacement interfibres $d' = 2R(b-1)$ satisfaisant le facteur d'esplacement respectif selon le nombre de rangées de fibres;
—le revêtement de chacune des fibres avec un matériau absorbant la lumière jusqu'à une épaisseur radiale connue $\Delta d$, et
—la compression des fibres revêtues dans un moule en matériau absorbant la lumière jusqu'à ce que les fibres soient espacées de la fibre contiguë ou de chaque fibre contigué suivant la distance déterminée ci-dessus.

**Patentansprüche**

1. Optisches Abbildungssystem mit wenigstens einer Reihe paralleler, optischer Gradientenindexfasern (52), die zwischen einer Gegenstandsebene (54) und einer Bildebene (62) angeordnet sind und sich senkrecht zu diesen derart erstrekken, daß von einem Gegenstand in der Gegenstandsebene ausgesandtes Licht auf die Bildebene übertragen wird, wobei die Faserachsen von den Achsen benachbarter Fasern in der gleichen Reihe und jeder benachbarten Reihe mit einem Abstand 2Rb beabstandet sind, mit R dem Radius (in mm) der Faser, dadurch gekennzeichnet, daß b ein Abstandsfaktor ist, der die Gleichung erfüllt

$$b = \frac{-\sec(\sqrt{A}\,L/2)\,.M}{\sqrt{S\,(S+1)}}$$

mit

A = Gradientenindexkonstante der Fasern
L = Faserlänge (in mm)
M = Anzahl der Reihen von Fasern
S = 1, 2, 3 . . . .

2. System nach Anspruch 1, dadurch gekennzeichnet, daß die Gleichung beim Vorliegen nur einer Reihe von Fasern abgeändert wird zu:

$$b = \frac{-\sec(\sqrt{A}\,L/2}{S + .175}$$

mit

A = Gradientenindexkonstante der Fasern
L = Faserlänge (in mm)
S = 1, 2, 3 . . . .

3. Verfahren zum Bilden einer Vielwahl von parallelen, optischen Gradientenindexfasern (20) zu einer Reihenanordung gemäß Anspruch 1 oder 2, dadurch gekennzeichnet, daß es die Schritte umfaßt:

Festlegen eines Zwischenfaserbeabstandungsabstandes d' = 2R(b−1), welcher den endsprechenden Abstandsfaktor gemäß der Anzahl von Faserreihen erfüllt,

Beschichten einer jeden Faser mit lichtabsorbierendem Material bis zu einer bekannten radialen Dicke Δd, und

Einpressen der beschichteten Fasern in eine Form aus lichtabsorbierendem Material, bis die Fasern von der oder jeder benachbarten Faser mit dem vorhergehend festgelegten Abstand beabstandet sind.

FIG. 1
PRIOR ART

FIG.2

1

FIG. 3

FIG. 4

FIG. 6A

FIG. 6

FIG.5

FIG.8

FIG. 7